# EUROPEAN PATENT SPECIFICATION

(11) **EP 2 606 544 B1**
(45) Date of publication and mention of the grant of the patent: **20.04.2016**
(21) Application number: 10749824.8
(22) Date of filing: 18.08.2010
(51) Int. Cl.: H02G 3/08, B67D 7/00, H02G 3/22

(54) **NEW SEALING DEVICE**
NEUE DICHTUNGSVORRICHTUNG
NOUVEAU DISPOSITIF D'ÉTANCHÉITÉ

(43) Date of publication of application: 26.06.2013
(73) Proprietor: Wayne Fueling Systems Sweden AB, 202 15 Malmö (SE)
(72) Inventor: LARSSON, Bengt, I., S-274 53 Skivarp (SE); MÅRTENSSON, Mattias, S-244 33 Kävlinge (SE); HELGESSON, Hanna, S-212 18 Malmö (SE); JEPPSSON, Nina, S-222 41 Lund (SE)
(74) Representative: Awapatent AB
(86) International application number: PCT/EP2010/062053
(87) International publication number: WO 2012/022379

(56) References cited:
- EP-A1- 0 653 825
- EP-A1- 1 333 007
- EP-A1- 1 643 604
- EP-A2- 2 106 006
- US-A- 5 814 766
- US-A1- 2008 115 955

## Description

### Technical field

The present invention relates to a new sealing plate adapted for being penetrated by electrical cables and/or electrical conduits. The sealing plate is intended for being used in connection with an electronics module in a fuel dispensing unit and able to seal a cable and/or a conduit passing through. Furthermore, the invention relates to a cable sealing kit comprising two sealing plates and a cable, where the two sealing plates are adapted for being penetrated by said through-going cable, as well as a conduit sealing kit comprising two sealing plates and a conduit, where the two sealing plates are adapted for being penetrated by said conduit. Finally, the invention relates to a fuel dispensing unit containing the sealing plates and/or the sealing kits.

### Background art

When passing a cable and/or an electrical conduit through a first and a second surface, the criteria of sealing that cable and/or conduit in relation to said surfaces naturally differ depending on the environmental circumstances. If the surfaces are part of an arrangement handling an inflammable substance, such as a fuel dispensing unit, the criteria of the sealing is high.

It is well-known that fuel, such as petrol or diesel, is a highly inflammable substance that must be handled with extreme care. An inherent property of fuel that increases the risks of its handling is its high volatility. For the above reasons, safety standards such as the UL standards for safety in North America and the ATEX directive, among others, have been created for fuel handling in order to reduce the thereby induced risks.

Fuel dispensing units generally comprise electronics in order for the user to be able to control the hydraulics of the fuel dispensing unit and refuel e.g. a vehicle. The electronics of the fuel dispensing unit can provide an increased risk in that for instance sparks from electronic circuitry and/or heat radiated from the electronic wiring and circuitry could ignite the fuel vapors. As a safety measure, the hydraulics and the electronics of a fuel dispensing unit are located in separate compartments or modules. However, in order to make the fuel dispensing unit operational it is necessary to pull cables and or electrical conduits containing such cables between the hydraulics compartment and the electronics compartment, thereby risking leading inflammable substance from the hydraulic compartment up and into the electronics compartment. Accordingly, a reliable sealing of a cable and/or a conduit passing between these compartments is crucial.

There is a number of different solutions for sealing a cable and an electrical conduit available on the market today. The technique used today is based on mounting the sealing device after the cable has been positioned. The cable to be sealed must be pulled through the surfaces in question before a gasket and some kind of sealing element is provided for each surface passed by the cable. A problem with sealing devices for cables and conduits according to this technique and other prior art is the vast amount of parts involved as well as difficulties of mounting the same. Accordingly, there is a need for simplified but still efficient sealing processes for cables as well as for conduits.

The document EP 0653825 A1 discloses a prior art sealing plate.

### Summary of the invention

It is an object of the present invention to provide an improvement of the above technique and prior art. More particularly, it is an object of the present invention to provide improved cable sealing and conduit sealing comprising a minimum of different parts and contributing to a simplified mounting of the same. Furthermore, it is an object of the present invention to provide a cable sealing kit, a conduit sealing kit, and a fuel dispensing unit comprising the improved cable and conduit sealing.

These and other objects as well as advantages that will be apparent from the following description of the present description are achieved by a sealing plate according to independent claim 1 and by using a sealing plate in accordance with what is stated in independent claim 7.

Accordingly, in a first aspect the invention provides a sealing plate adapted for being penetrated by an electrical cable and/or by an electrical conduit. The sealing plate is able to seal a cable and/or an electrical conduit passing through, and intended for being used in connection with an electronics module in a fuel dispensing unit. More specifically, the sealing plate comprises a metal plate having at least one knock out hole, and a skin of an optionally thermoplastic elastomer has been joined to the metal plate, thereby tightly covering the knockout hole.

As disclosed herein, the term "knockout hole" is a common term in the field of cables and electrical appliances and relates to a structure of a plate where a pattern of perforations renders it easy to knock out a through-going hole therein.

The skin joined to the metal plate is made of an elastomer in order to ensure sufficient tightening and flexibility. It is important that the elastomer is not harmed and adversely affected by the inflammable fuel vapors in a fuel dispensing device. In order to simplify manufacturing it is preferred that the elastomer material is thermoplastic. The skilled person is well aware of suitable elastomers that could be used in connection with the present invention.

The skin could be joined to the metal plate in many different ways. The skin may be joined chemically to the plate by applying adhesives, grafting, vulcanizing, casting and/or directly polymerizing the skin, etc. The skin could also be joined to the plate by mechanical means, such as nails, bolts, nuts or other fastening means. It is important that the skin is joined tightly to the plate. The skilled person is well aware of suitable ways of joining the elastomer skin to the metal plate.

Preferably, said skin is been joined to said metal plate by an adhesive or by mechanical means.

In a preferred embodiment, said skin encloses a substantial part of said metal plate. As disclosed herein, the term "a substantial part of said metal plate" relates to the part of the metal plate that is exposed to the volatile and highly inflammable vapors.

In a particularly preferred embodiment, said skin has been joined to said metal plate by protrusions extending from said elastomer skin through holes in said metal plate, and where the end parts of said protrusions have larger diameters than said holes, thereby tightly joining said elastomer skin to said metal plate.

In a particularly preferred embodiment, that there are markings and/or recesses on said elastomer skin in proximity to said at least one knockout hole.

In a second aspect of the present invention, it is provided use of a sealing plate comprising a metal plate through which at least one knocked out knockout hole intended for cable passage and/or conduit passage has been formed, and to which a skin of a polymerized and preferably thermoplastic elastomer has been joined, thereby tightly covering said hole, in a fuel dispensing unit for sealing a cable and/or a conduit passing through said plate against undesirable leakage of highly inflammable and volatile substances.

It is preferred that said skin has been mechanically joined to said metal plate or joined by an adhesive to said metal plate, optionally by enclosing a substantial part of said metal plate.

In a third aspect, the invention provides a cable sealing kit for a fuel dispensing unit comprising:
a) a first sealing plate comprising a metal plate at least partially tightly covered with a skin of an optionally thermoplastic elastomer, said first sealing plate having a first knockout hole in the part of said metal plate covered with said skin, said knockout hole having a cross section area a₁;
b) a second sealing plate comprising a metal plate at least partially tightly covered with a skin of an optionally thermoplastic elastomer, said second sealing plate having a second knockout hole in the part of said metal plate covered with said skin, said second knockout hole having cross section area a₂, wherein a₂ < a₁; and
c) a cable adapted for being sealed by said first sealing plate and said second sealing plate, said cable having a first blocking part, a first penetrating part, a second blocking part, a second penetrating part and optionally a locking part;
wherein said first blocking part has a cross section area substantially larger than a₁, and wherein said first blocking part is covered by an optionally thermoplastic elastomer;
wherein said first penetrating part has a cross section corresponding to said cross section area a₁;
wherein said second blocking part may pass through said first knockout hole and has a cross section area less than a₁ but larger than a₂, and wherein said second blocking part is covered by an optionally thermoplastic elastomer;
wherein said second penetrating part has a cross section corresponding to said cross section area a₂; and
wherein said optional locking part is adapted for passage through said first and second through-going holes and/or knockout holes, and comprises means for hooking into said second sealing plate.

It is preferred that at least one of said first and second sealing plates are sealing plates according to the first aspect of the present invention.

It is also preferred that at least one of said first and second sealing plates comprises a metal plate through which at least one through-going hole intended for cable passage has been formed, and to which a skin of a polymerized and preferably thermoplastic elastomer has been joined, thereby tightly covering said hole.

In a fourth aspect, the present invention provides a conduit sealing kit for a fuel dispensing unit comprising
a) a first sealing plate comprising a metal plate at least partially covered with a skin of an optionally thermoplastic elastomer, said metal plate having a first or knockout hole in the part of said metal plate covered with said skin;
b) a second sealing plate comprising a metal plate at least partially tightly covered with a skin of an optionally thermoplastic elastomer, said metal plate having a second knockout hole in the part of said metal plate covered with said skin; and
c) a conduit adapted for passing through said first sealing plate and said second sealing plate trough their knockout holes;
wherein said skins are adapted for being ruptured when penetrated by the conduit in such a way that said skins together with said conduit provide additional sealing against undesired leakage of highly inflammable and volatile substances.

It is preferred that at least one of said first and second sealing plates are sealing plates according to the first aspect of the present invention.

It is also preferred that at least one of said first and second sealing plates comprises a metal plate through which at least one through-going hole intended for cable passage has been formed, and to which a skin of a polymerized and preferably thermoplastic elastomer has been joined, thereby tightly covering said hole.

In a fifth aspect, the present invention provides a fuel dispensing unit for refueling motor vehicles comprising a sealing plate according to the first aspect of the present invention.

In a seventh aspect, the invention provides a fuel dispensing unit for refueling motor vehicles comprising a cable sealing kit according to the third aspect of the present invention or a conduit sealing kit according to the fourth aspect of the present invention.

Generally, all terms used in the claims are to be interpreted according to their ordinary meaning in the technical field, unless explicitly defined otherwise herein. All references to "a/an/the [element, device, component, means, etc]" are to be interpreted openly as referring to at least one instance of said element, device, component, means, etc., unless explicitly stated otherwise.

### Brief description of the drawings

The above, as well as additional objects, features and advantages of the present invention will be better understood through the following illustrative and non-limiting detailed description of preferred embodiments of the present invention, with reference to the appended drawings, where the same reference numerals will be used for similar elements, wherein:
Fig. 1 is a perspective view of a sealing plate according to one embodiment of the present invention when unassembled;
Fig. 2 is a view from below of a sealing plate according to the present invention;
Fig. 3 is a view from above of the sealing plate shown in Fig. 2;
Fig. 4 is a cross section view of a sealing plate along the line I - II in Fig. 3;
Fig. 5 is a perspective view of a sealing plate according to one another embodiment of the present invention when unassembled;
Fig. 6 is a sectional view of an assembled cable sealing kit according to the invention; and
Fig. 7 is a perspective view of a fuel dispensing unit comprising a cable sealing kit according to the invention.
Fig. 8a and 8b discloses cross-sectional views of two other embodiments of sealing plates according to the present invention; and
Fig. 9 presents a simplified cross-sectional view of a conduit sealing kit according to the present invention.

### Detailed description of preferred embodiments of the invention

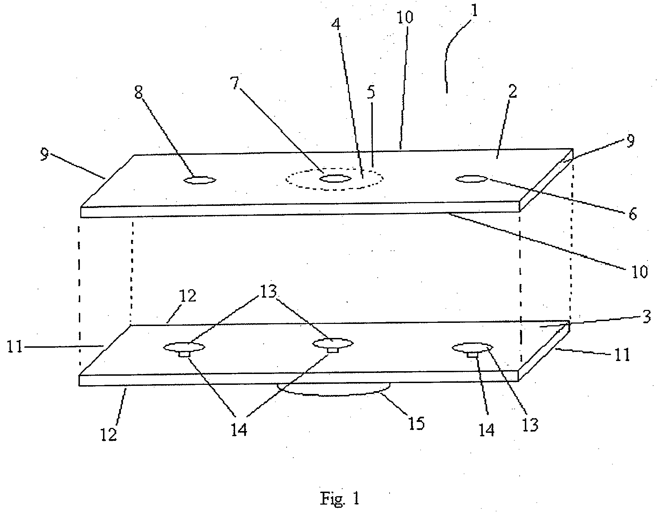

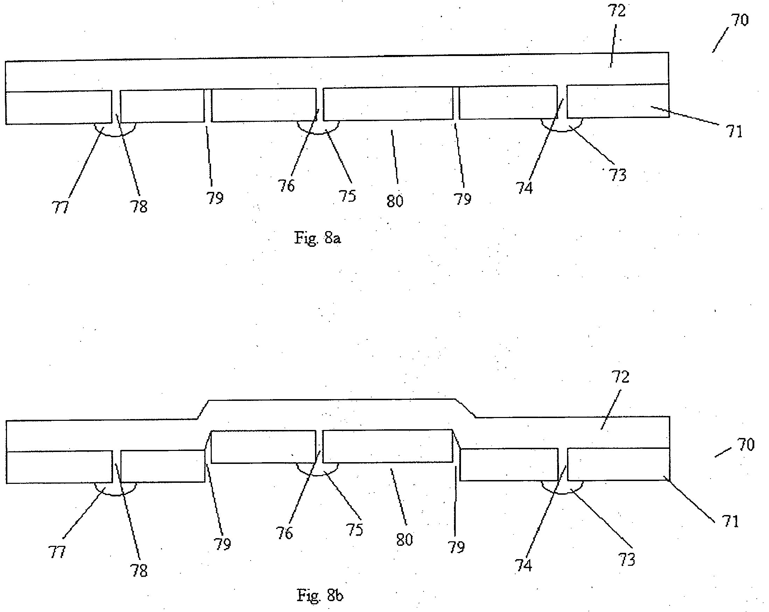

Fig. 1 shows a perspective view of a sealing plate 1 according to an embodiment of the present invention when unassembled. Basically, the sealing plate 1 is comprised of a metal plate 2 having two longer sides 10 and two shorter sides 9 to which a skin 3 of a preferably thermoplastic elastomer has been joined. The metal plate 2 has at least one knockout hole 4. The knockout hole may have any shape but typically the shape is circular or elliptic. There are through-going minor holes or perforations along the edge 5 of said knockout hole 4. In the embodiment shown in fig. 1, the plate part of said hole 4 is in the same plane as the rest of the metal plate 2, but the plate part may also be in a slightly elevated or lowered plane. An example is shown in Fig. 8b and discussed in more detail below. The skilled person is well aware of different types of knockout holes. When knocked out, the hole 4 is adapted for being penetrated by an electrical cable and/or an electrical conduit. Fig. 1 also shows also other through-going holes 6, 7, 8 in the metal plate 2. These holes 6, 7, 8 are used for joining a skin 3 of a preferably thermoplastic elastomer. However, in case skin 3 is joined to metal plate 2 by an adhesive, there is no need for holes such as those marked by 6, 7, 8, and they could therefore be omitted. A skin 3 having longer sides 12 and shorter sides 11 is anchored to the metal plate 2 by protrusions 13. The protrusions 13 are adapted for extending through holes 6, 7 and 8. They all have necks 14 with smaller cross sections than their upper part. On the underside in a position corresponding to knockout hole 4, there is typically a ring-shaped flange 15 marking the position of knockout hole 4 and providing additional sealing.

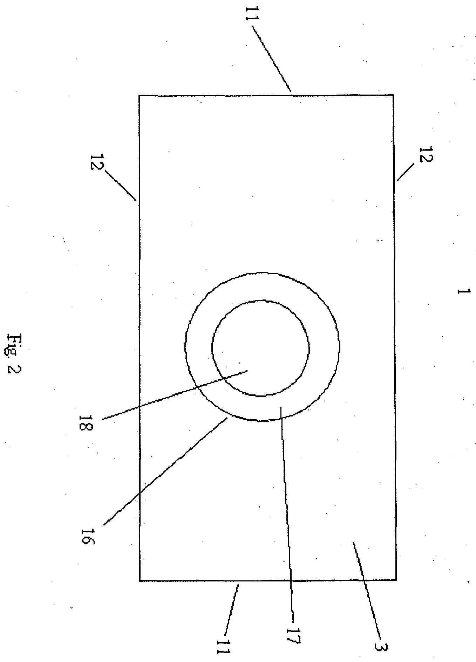

Fig. 2 discloses a view from below of the assembled sealing plate of Fig.1. Metal plate 2 is in this embodiment completely covered by skin 3. In a position corresponding to knockout hole 4 in metal plate 2, there is normally a marking 16 which typically is designed as a flange having the same size and shape as knockout hole 4. In the area 18 inside the flange, there are typically recesses facilitating rapture of the skin in case of penetration by a cable or a conduit.

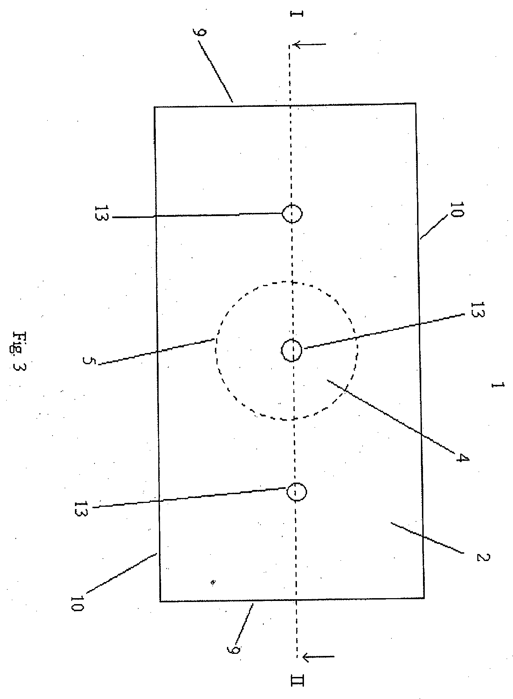

Fig. 3 presents a view from above of the assembled sealing plate of Fig. 1. In the embodiment shown, skin 3 is tightly joined to metal plate 2 by protrusions 13. There is also a protrusion 13 in the knockout hole area 4. However, in case skin 3 is joined to metal plate 2 by an adhesive, there is no need for such protrusions 13 for anchoring skin 3.

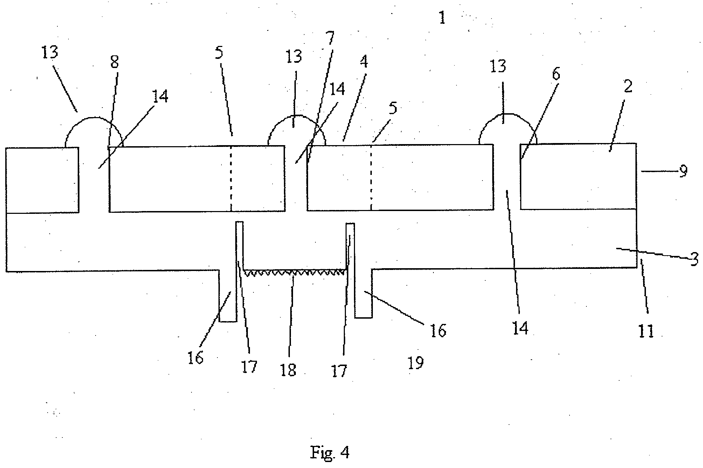

Fig. 4 shows a cross-sectional view of the sealing plate 1 of Fig. 3 along line I - II. Skin 3 is joined tightly to metal plate 2 by protrusions 13 extending through holes 6, 7, and 8. As already mentioned, said protrusions 13 and holes 6, 7, 8 are omitted in case skin 3 is joined to metal plate 2 by an adhesive. Necks 14 of protrusions 13 fill up holes 6, 7, and 8 completely thereby obtaining a tight sealing. A flange 16 is typically located directly below edge 5 of knockout hole 4. Inside flange 16, there is a normally recess facilitating local rapture of the skin. Furthermore, there could be markings 18 in the area inside flange 16 showing location of knockout hole 4.

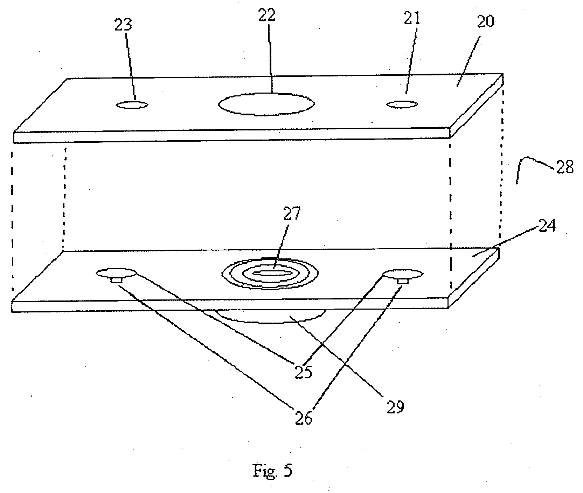

Fig. 5 discloses a perspective view of a sealing plate 28 according to an alternative embodiment of the present invention when unassembled. Sealing plate 28 is comprised of a metal plate 20 to which a skin 24 of a preferably thermoplastic elastomer has been joined. Metal plate 20 has at least one knocked out knockout hole 22 adapted for being penetrated by an electrical cable or an electrical conduit. Hole 22 may have any shape but typically the shape is circular or elliptic. There could also be other through-going holes 21, 23 in metal plate 20. These holes 21, 23 are used for joining skin 24 of a preferably thermoplastic elastomer. Skin 24 is anchored to metal plate 20 by protrusions 25. The protrusions 25 are adapted for extending through holes 21 and 23. They all have necks 26 with smaller cross sections than their upper part. However, in case skin 24 is joined to metal plate 20 by an adhesive, there are no corresponding holes 21, 23 and protrusions 25. On the underside in a position corresponding to through-going hole 22, there is typically a ring-shaped flange 29 marking the position of through-going hole 22 and providing additional sealing.

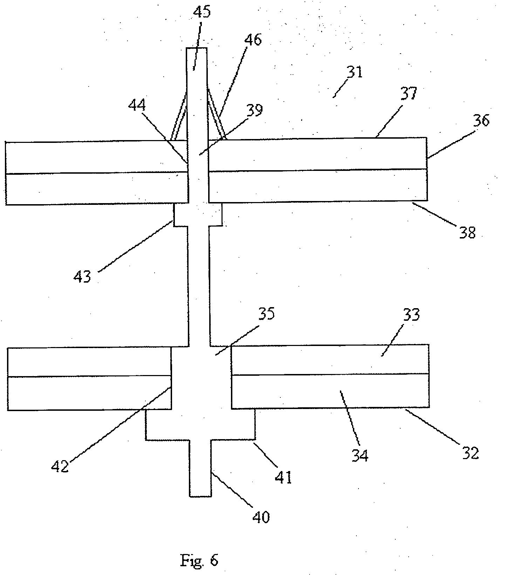

Fig. 6 is a sectional view of an assembled cable sealing kit 31 according to the invention. The kit 31 is comprised of a first sealing plate 32, a second sealing plate 36 and a cable part 40. Sealing plates 32 and 36 may independently of each other be according to the embodiment shown in Figs. 1 - 4 or Fig. 5. Accordingly, First sealing plate 32 is comprised of metal plate 33 to which an elastomeric skin 34 has been joined. There is a through-going hole or knockout hole 35 in first metal plate 33 having cross section area a₁. Second sealing plate 36 is comprised of metal plate 37 to which an elastomeric skin 38 has been joined. There is a through-going hole or knockout hole 39 in second metal plate 37 having cross section area a₂. Cable 40 is adapted for passing through both first and second sealing plates 32 and 36 thereby providing good sealing against undesirable leakage of highly inflammable and volatile substances.

Cable 40 comprises a first blocking part 41, a first penetrating part 42, a second blocking part 43, a second penetrating part 44 and optionally a locking part 45. The first blocking part 41 has a cross section area substantially larger than a₁. Typically, this enlarged subsection has been obtained by covering first blocking part 41 with an optionally thermoplastic elastomer, for instance by casting. The skilled person is well aware of suitable methods for covering cables with elastomer materials. The function of the first blocking part is to provide good sealing in cooperation with skin 34 of sealing plate 32. The first penetrating part 42 has a cross section and geometry corresponding to said cross section area a₁. Accordingly, penetrating part 42 may pass through hole 35 but as it is designed to fit closely into hole 35 and is covered by an elastomer, it is also capable to provide good sealing against undesirable leakage of volatile and inflammable substances. The second blocking part 43 is adapted for passing through said first through hole or knockout hole 35 and has a cross section area less than a₁ but larger than a₂. Furthermore, the second blocking part 43 is also covered by an optionally thermoplastic elastomer. The function of the second blocking part is to provide good sealing in cooperation with skin 38 of sealing plate 37. The second penetrating part 44 has a cross section and geometry corresponding to said cross section area a₂. Accordingly, penetrating part 44 may pass through hole 39 but as it is designed to fit closely into hole 39 and is covered by an elastomer, it is also capable to provide good sealing against undesirable leakage of volatile and inflammable substances. The locking part 45 is adapted for passage through first and second through-going holes and/or knockout holes 35 and 39. Optional locking part 45 comprises means 46 for hooking into said second sealing plate 36, thereby anchoring the cable and preventing leakage caused by accidental removal of cable 40.

Fig. 8a discloses a cross-sectional view of sealing plates according to an embodiment of the present invention where the partially cut-out metal plate of the knockout hole is in the same level as the rest of the metal plate and Fig. 8b discloses an embodiment where the partially cut-out metal plate is uplifted in relation to the rest of the metal plate. Accordingly, sealing plate 70 is comprised of metal plate 71 and an elastomer skin 72 tightly joined to said metal plate 71 by protrusions consisting of necks 74, 76, 78 and heads 73, 75, 77. Naturally, in case skin 72 is joined to metal plate 71 by an adhesive, skin 72 would not have any such protrusions and there would not be any corresponding holes in metal plate 71 either. Metal plate 71 also has at least one partially cut-out knockout hole 80 delimited by perforations 79.

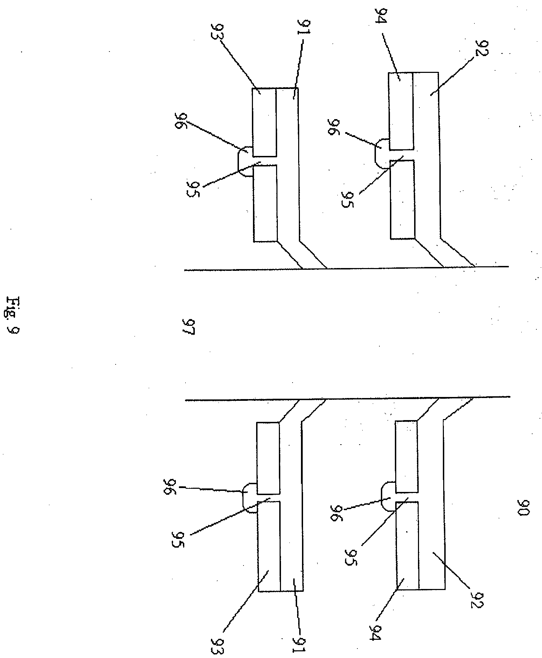

Fig. 9 presents a simplified cross-sectional view of a mounted sealing kit 90 consisting of two similar sealing plates and a conduit 97 adapted for passing through said sealing plates. Each sealing plate is comprised of a metal plate 93, 94 and an elastomer skin 91, 92 tightly joined to said metal plate 93, 94. The skin may be joined to the plate in any suitable way, such as by way of adhesives or by protrusions comprised of a head 96 and a neck 95 protruding through holes in the metal plates 93, 94. The conduit 97 containing at least one cable is pressed through the sealing plates thereby knocking out any knockout hole and rupturing skin parts covering knockout holes and/or regular holes in the metal plates. Before use in a fuel dispensing unit, the conduit is filled with appropriate sealing material providing additional sealing.

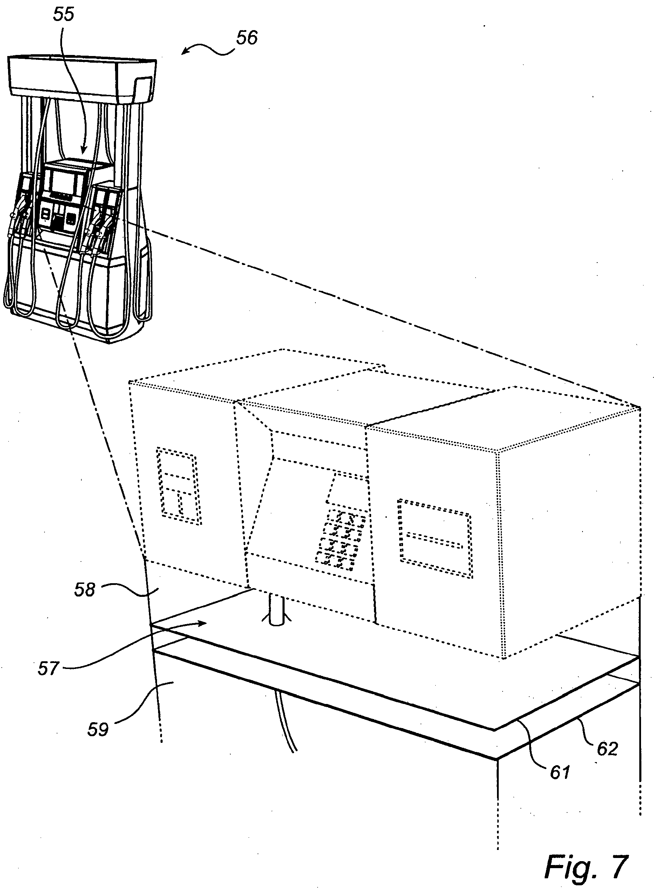

Fig. 7 illustrates an electronics module 55 provided in a fuel dispensing unit 56. The electronics module 55 has a first compartment 58 and a second compartment 59. Between these two compartments 58, 59 there is an air gap 57. Furthermore, there is a need to draw a plurality of cables and/or conduits 60 between the first and second compartments 58, 59. Sealing plates 61, 62 according to the present invention constitute borders between compartments 58 and 59 and air gap 57.

When a cable or a conduit is drawn from one compartment to another, the need for proper sealing depends on the environmental circumstances. If a cable or a conduit for example is to be pulled from the hydraulics compartment up and into the electronics department of a fuel dispensing unit, there is a risk of bringing inflammable substances into the electronics department and thus increasing the risk of explosion. Accordingly, the requirements regarding that type of sealing are high. The requirements may be reduced by letting the cable or conduit extend through an air gap between the compartments through which it is drawn. That is to say, it is preferred if the cable extend from a first compartment, i.e. the hydraulics compartment of a fuel dispensing unit, through an air gap where the cable is subjected to ventilation by air and up and into a second compartment, i.e. the electronics compartment of a fuel dispensing unit. As mentioned above, the present invention relates to sealing plates made of metal plates containing holes and/or knockout holes covered by an elastomer skin. When a cable or a conduit is drawn through a hole and/or a knockout hole, the elastomer skin is designed to rapture in vicinity of thereof. The cable or conduit and the remaining elastomer skin then together provide good sealing against undesirable leakage of inflammable substances.

The invention has mainly been described above with reference to a few embodiments. However, as is readily appreciated by a person skilled in the art, other embodiments than the ones disclosed above are equally possible within the scope of the invention, as defined by the appending claims.

## Claims

1. A sealing plate (1) adapted for being penetrated by a cable and/or an electrical conduit, said sealing plate being able to seal a cable and/or an electrical conduit passing through, said sealing plate being intended for being used in connection with an electronics module in a fuel dispensing unit, wherein said sealing plate comprises a metal plate (2) having at least one knock out hole (4), **characterized in that** a skin (3) of an elastomer has been joined to said metal plate (2), thereby tightly covering said knock out hole (4).

2. A sealing plate (1) according to claim 1, **characterized in that** said elastomer is a thermoplastic elastomer.

3. A sealing plate (1) according to claim 1 or claim 2, **characterized in that** said skin (3) has been joined to said metal plate (2) by an adhesive or by mechanical means.

4. A sealing plate (1) according claim 3, **characterized in that** said skin (3) encloses a substantial part of said metal plate (2).

5. A sealing plate (1) according to claim 3, **characterized in that** said skin (3) has been joined to said metal plate (2) by protrusions (14) extending from said elastomer skin (3) through holes (6, 8) in said metal plate, and where the end parts (13) of said protrusions have larger diameters than said holes (6, 8), thereby tightly joining said elastomer skin (3) to said metal plate (2).

6. A sealing plate (1) according to any of claims 1 - 5, **characterized in that** there are markings (18) and/or recesses (17) on said elastomer skin (3) in proximity to said at least one knock out hole.

7. Use of a sealing plate (28) comprising a metal plate (20) through which at least one knocked out knock out hole (22) intended for cable passage and/or passage of an electrical conduit has been formed, and to which a skin (24) of a polymerized elastomer has been joined, thereby tightly covering said hole (22), in a fuel dispensing unit for sealing a cable and/or an electrical conduit passing through said plate against undesirable leakage of highly inflammable and volatile substances.

8. Use according to claim 7, **characterized in that** said elastomer is a thermoplastic elastomer.

9. Use according to claim 7 or claim 8, **characterized in that** said skin (24) has been joined to said metal plate (20) by an adhesive or by mechanical means, optionally by enclosing a substantial part of said metal plate.

10. A cable sealing kit (31) for a fuel dispensing unit comprising
a) a first sealing plate (32) comprising a metal plate (33) at least partially tightly covered with a skin (34) of an elastomer, said first sealing plate (32) having a first knockout hole (35) in the part of said metal plate (33) covered with said skin (34), said knockout hole (35) having a cross section area a₁;
b) a second sealing plate (36) comprising a metal plate (37) at least partially tightly covered with a skin (38) of an elastomer, said second sealing plate (36) having a second knockout hole (39) in the part of said metal plate (37) covered with said skin (38), said second knockout hole (39) having cross section area a₂, wherein a₂ < a₁; and
c) a cable (40) adapted for being sealed by said first sealing plate (32) and said second sealing plate (36), said cable (40) having a first blocking parts (41), a first penetrating part (42), a second blocking part (43), and a second penetrating part (44),
wherein said first blocking part (41) has a cross section area substantially larger than a₁, and wherein said first blocking part (41) is covered by an elastomer;
wherein said first penetrating part (42) has a cross section and geometry corresponding to said cross section area a₁;
wherein said second blocking part (43) may pass through said first knockout hole (35) and has a cross section area less than a₁ but larger than a₂, and wherein said second blocking part (43) is covered by an elastomer; and
wherein said second penetrating part (44) has across section and geometry corresponding to said cross section area a₂.

11. A cable sealing kit according to claim 10, **characterized in that** said elastomers are thermoplastic elastomers.

12. A cable sealing kit according to claim 10 or claim 11, **characterized in that** said cable (40) has a locking part (45), which is adapted for passage through said first and second knockout holes (35, 39), and which comprises means (46) for hooking into said second sealing plate (36).

13. A cable sealing kit according to anyone of claims 10 -12, **characterized in that** at least one of said first and second sealing plates (32, 36) are sealing plates according to any of claims 1 - 5.

14. A cable sealing kit according to anyone of claims 10-12, **characterized in that** at least one of said first and second sealing plates (32, 36) comprises a metal plate (20) through which at least one through-going hole (22) intended for cable passage has been formed, and to which a skin (24) of a polymerized and preferably thermoplastic elastomer has been joined, thereby tightly covering said hole (22).

15. A conduit sealing kit (90) for a fuel dispensing unit comprising
a) a first sealing plate (98) comprising a metal plate (93) at least partially tightly covered with a skin (91) of an elastomer, said metal plate (93) having a first knockout hole (100) in the part of said metal plate (94) covered with said skin (91);
b) a second sealing plate (99) comprising a metal plate (94) at least partially tightly covered with a skin (92) of an elastomer, said metal plate (94) having a second knockout hole (101) in the part of said metal plate (94) covered with said skin (92); and
c) a conduit (97) adapted for passing through said first sealing plate (98) and said second sealing plate (99) trough their knockout holes (100, 101);
wherein skins (91, 92) are adapted for being ruptured when penetrated by conduit (97) in such a way that said skins (91, 92) together with said conduit (97) provide additional sealing against undesired leakage of highly inflammable and volatile substances.

16. A conduit sealing kit (90) according to claim 15, **characterized in that** said elastomers are thermoplastic elastomers.

17. A conduit sealing kit (90) according to claim 15 or claim 16, **characterized in that** at least one of said first and second sealing plates (98, 99) are sealing plates according to any of claims 1 - 5.

18. A conduit sealing kit (90) according to claim 15 or claim 16, **characterized in that** at least one of said first and second sealing plates (98, 99) comprises a metal plate (20) through which at least one through-going hole (22) intended for conduit passage has been formed, and to which a skin (24) of a polymerized and preferably thermoplastic elastomer has been joined, thereby tightly covering said hole (22).

19. A fuel dispensing unit (56) for refueling motor vehicles, **characterized in that** it comprises a sealing plate (61, 62) according to any of claims 1 - 6.

20. A fuel dispensing unit (56) for refueling motor vehicles, **characterized in that** it comprises a cable sealing kit (31) according to any of claims 10 - 14 and/or a conduit sealing kit (90) according to any of claims 15 -18.

## Patentansprüche

1. Abdichtplatte (1), die dafür ausgelegt ist, von einem Kabel und/oder einer elektrischen Durchführung durchdrungen zu werden, wobei die Abdichtplatte in der Lage ist, ein Kabel und/oder eine hindurchlaufende elektrische Durchführung abzudichten, wobei die Abdichtplatte zur Verwendung mit einem Elektronikmodul in einer Kraftstoffabgabeeinheit bestimmt ist, wobei die Abdichtplatte eine Metallplatte (2) umfasst, die mindestens ein Durchschlagloch (4) aufweist, **dadurch gekennzeichnet, dass** eine Haut (3) eines Elastomers mit der Metallplatte (2) verbunden wurde, um dadurch das Durchschlagloch (4) dicht abzudecken.

2. Abdichtplatte (1) nach Anspruch 1, **dadurch gekennzeichnet, dass** das Elastomer ein thermoplastisches Elastomer ist.

3. Abdichtplatte (1) nach Anspruch 1 oder Anspruch 2, **dadurch gekennzeichnet, dass** die Haut (3) durch einen Kleber oder durch mechanische Mittel mit der Metallplatte (2) verbunden wurde.

4. Abdichtplatte (1) nach Anspruch 3, **dadurch gekennzeichnet, dass** die Haut (3) einen wesentlichen Teil der Metallplatte (2) einschließt.

5. Abdichtplatte (1) nach Anspruch 3, **dadurch gekennzeichnet, dass** die Haut (3) durch Vorsprünge (14), die sich von der Elastomerhaut (3) durch Löcher (6, 8) in der Metallplatte erstrecken, mit der Metallplatte (2) verbunden wurde und wobei die Endteile (13) der Vorsprünge größere Durchmesser als die Löcher (6, 8) aufweisen, um dadurch die Elastomerhaut (3) dicht mit der Metallplatte (2) zu verbinden.

6. Abdichtplatte (1) nach einem der Ansprüche 1-5, **dadurch gekennzeichnet, dass** sich auf der Elastomerhaut (3) in der Nähe des mindestens einen Durchschlaglochs Markierungen (18) und/oder Auspaarungen (17) befinden.

7. Gebrauch einer Abdichtplatte (28), die eine Metallplatte (20) umfasst, durch die mindestens ein durchgeschlagenes Durchschlagloch (22), das für Kabeldurchgang und/oder Durchgang einer elektrischen Durchführung bestimmt ist, gebildet wurde und mit der eine Haut (24) aus einem polymerisierten Elastomer verbunden wurde, um dadurch das Loch (22) dicht abzudecken, in einer Kraftstoffabgabeeinheit zum Abdichten eines Kabels und/oder einer elektrischen Durchführung, das bzw. die durch die Platte verläuft, gegen unerwünschtes Lecken von sehr feuergefährlichen und flüchtigen Substanzen.

8. Gebrauch nach Anspruch 7, **dadurch gekennzeichnet, dass** das Elastomer ein theromplastisches Elastomer ist.

9. Gebrauch nach Anspruch 7 oder Anspruch 8, **dadurch gekennzeichnet, dass** die Haut (24) durch einen Kleber oder durch mechanische Mittel mit der Metallplatte (20) verbunden wurde, gegebenenfalls durch Einschließen eines wesentlichen Teils der Metallplatte.

10. Kabelabdichtkit (31) für eine Kraftstoffabgabeeinheit, umfassend:
a) eine erste Abdichtplatte (32), die eine Metallplatte (33) umfasst, die mindestens teilweise dicht mit einer Haut (34) eines Elastomers abgedeckt ist, wobei die erste Abdichtplatte (32) ein erstes Durchschlagloch (35) in dem mit der Haut (34) abgedeckten Teil der Metallplatte (33) aufweist, wobei das Durchschlagloch (35) eine Querschnittsfläche a₁ aufweist;
b) eine zweite Abdichtplatte (36), die eine Metallplatte (37) umfasst, die mindestens teilweise dicht mit einer Haut (38) aus einem Elastomer abgedeckt ist, wobei die zweite Abdichtplatte (36) ein zweites Durchschlagloch (39) in dem mit der Haut (38) abgedeckten Teil der Metallplatte (37) aufweist, wobei das zweite Durchschlagloch (39) eine Querschnittsfläche a₂ aufweist, wobei a₂ < a₁ ist; und
c) ein Kabel (40), das dafür ausgelegt ist, durch die erste Abdichtplatte (32) und die zweite Abdichtplatte (36) abgedichtet zu werden, wobei das Kabel (40) einen ersten Blockierungsteil (41), einen ersten Durchdringungsteil (42), einen zweiten Blockierungsteil (43) und einen zweiten Durchdringungsteil (44) aufweist,
wobei der erste Blockierungsteil (41) eine Querschnittsfläche von wesentlich mehr als a₁ aufweist und wobei der erste Blockierungsteil (41) durch ein Elastomer abgedeckt wird;
wobei der erste Durchdringungsteil (42) einen Querschnitt und eine Geometrie entsprechend der Querschnittsfläche a₁ aufweist;
wobei der zweite Blockierungsteil (43) durch das erste Durchschlagloch (35) verlaufen kann und eine Querschnittsfläche von weniger als a₁ aber mehr als a₂ aufweist, und wobei der zweite Blockierungsteil (43) durch ein Elastomer abgedeckt wird; und
wobei der zweite Durchdringungsteil (44) einen Querschnitt und eine Geometrie entsprechend der Querschnittsfläche a₂ aufweist.

11. Kabelabdichtkit nach Anspruch 10, **dadurch gekennzeichnet, dass** die Elastomere thermoplastische Elastomere sind.

12. Kabelabdichtkit nach Anspruch 10 oder Anspruch 11, **dadurch gekennzeichnet, dass** das Kabel (40) einen Verriegelungsteil (45) aufweist, der für Durchgang durch das erste und zweite Durchschlagloch (35, 39) ausgelegt ist und der ein Mittel (46) zum Einhaken in die zweite Abdichtplatte (36) umfasst.

13. Kabelabdichtkit nach einem der Ansprüche 10-12, **dadurch gekennzeichnet, dass** die erste und/oder die zweite Abdichtplatte (32, 36) Abdichtplatten nach einem der Ansprüche 1-5 sind.

14. Kabelabdichtkit nach einem der Ansprüche 10-12, **dadurch gekennzeichnet, dass** die erste und/oder die zweite Abdichtplatte (32, 36) eine Metallplatte (20) umfassen, durch die mindestens ein für Kabeldurchgang bestimmtes Durchgangsloch (22) gebildet wurde und mit der eine Haut (24) aus einem polymerisierten und vorzugweise thermoplastischen Elastomer verbunden wurde, um dadurch das Loch (22) dicht abzudecken.

15. Durchführungsabdichtkit (90) für eine Kraftstoffabgabeeinheit, umfassend:
a) eine erste Abdichtplatte (98), die eine Metallplatte (93) umfasst, die mindestens teilweise dicht mit einer Haut (91) eines Elastomers abgedeckt ist, wobei die Metallplatte (93) ein erstes Durchschlagloch (100) in dem mit der Haut (91) abgedeckten Teil der Metallplatte (94) aufweist;
b) eine zweite Abdichtplatte (99), die eine Metallplatte (94) umfasst, die mindestens teilweise dicht mit einer Haut (92) aus einem Elastomer abgedeckt ist, wobei die Metallplatte (94) ein zweites Durchschlagloch (101) in dem mit der Haut (92) abgedeckten Teil der Metallplatte (94) aufweist;
c) eine Durchführung (97), die dafür ausgelegt ist, durch die erste Abdichtplatte (98) und die zweite Abdichtplatte (99) durch ihre Durchschlaglöcher (100, 101) zu verlaufen;
wobei die Häute (91, 92) dafür ausgelegt sind, zerrissen zu werden, wenn sie durch die Durchführung (97) durchdrungen werden, dergestalt, dass die Häute (91, 92) zusammen mit der Durchführung (97) zusätzliche Abdichtung gegen unerwünschtes Lecken von sehr feuergefährlichen und flüchtigen Substanzen bereitstellen.

16. Durchführungsabdichtkit (90) nach Anspruch 15, **dadurch gekennzeichnet, dass** die Elastomere thermoplastische Elastomere sind.

17. Durchführungsabdichtkit (90) nach Anspruch 15 oder Anspruch 16, **dadurch gekennzeichnet, dass** die erste und/oder die zweite Abdichtplatte (98, 99) Abdichtplatten nach einem der Ansprüche 1-5 sind.

18. Durchführungsabdichtkit (90) nach Anspruch 15 oder Anspruch 16, **dadurch gekennzeichnet, dass** die erste und/oder die zweite Abdichtplatte (98, 99) eine Metallplatte (20) umfassen, durch die mindestens ein für Kabeldurchgang bestimmtes Durchgangsloch (22) gebildet wurde und mit der eine Haut (24) aus einem polymerisierten und vorzugweise thermoplastischen Elastomer verbunden wurde, um dadurch das Loch (22) dicht abzudecken.

19. Kraftstoffabgabeeinheit (56) zum Auftanken von Kraftfahrzeugen, **dadurch gekennzeichnet, dass** sie eine Abdichtplatte (61, 62) nach einem der Ansprüche 1-6 umfasst.

20. Kraftstoffabgabeeinheit (56) zum Auftanken von Kraftfahrzeugen, **dadurch gekennzeichnet, dass** sie ein Kabelabdichtkit (31) nach einem der Ansprüche 10-14 und/oder ein Durchführungsabdichtkit (90) nach einem der Ansprüche 15-18 umfasst.

## Revendications

1. Plaque d'étanchéité (1) conçue pour être pénétrée par un câble et/ou un conduit électrique, ladite plaque d'étanchéité étant capable d'obturer de manière étanche un câble et/ou un conduit électrique la traversant, ladite plaque d'étanchéité étant destinée à être utilisée en relation avec un module électronique dans une unité de distribution de carburant, ladite plaque d'étanchéité étant constituée d'une plaque métallique (2) ayant au moins un trou à défoncer (4), **caractérisée en ce qu'**une peau (3) d'un élastomère a été jointe à ladite plaque métallique (2), de manière à couvrir de manière étanche ledit trou à défoncer (4).

2. Plaque d'étanchéité (1) selon la revendication 1, **caractérisée en ce que** ledit élastomère est un élastomère thermoplastique.

3. Plaque d'étanchéité (1) selon la revendication 1 ou 2, **caractérisée en ce que** ladite peau (3) a été jointe à ladite plaque métallique (2) par un adhésif ou par un moyen mécanique.

4. Plaque d'étanchéité (1) selon la revendication 3, **caractérisée en ce que** ladite peau (3) enferme une partie notable de ladite plaque métallique (2).

5. Plaque d'étanchéité (1) selon la revendication 3, **caractérisée en ce que** ladite peau (3) a été jointe à ladite plaque métallique (2) par des protubérances (14) s'étendant à partir de ladite peau élastomère (3) à travers des trous (6, 8) dans ladite plaque métallique, les parties extrêmes (13) desdites protubérances ayant des diamètres plus grands que lesdits trous (6, 8), de manière à joindre de manière étanche ladite peau élastomère (3) à ladite plaque métallique (2).

6. Plaque d'étanchéité (1) selon l'une quelconque des revendications 1 à 5, **caractérisée en ce qu'**il existe des marques (18) et/ou des creux (17) sur ladite peau élastomère (3) à proximité dudit au moins un trou à défoncer.

7. Utilisation d'une plaque d'étanchéité (28) constituée d'une plaque métallique (20) dans laquelle a été formé au moins un trou à défoncer (22) défoncé, destiné au passage d'un câble et/ou au passage d'un conduit électrique, et sur laquelle a été jointe une peau (24) d'un élastomère polymérisé, de façon à couvrir de manière étanche ledit trou (22), dans une unité de distribution de carburant, ladite plaque servant à obturer de manière étanche un câble et/ou un conduit électrique traversant ladite plaque contre une fuite indésirable de substances hautement inflammables et volatiles.

8. Utilisation selon la revendication 7, **caractérisée en ce que** ledit élastomère est un élastomère thermoplastique.

9. Utilisation selon la revendication 7 ou 8, **caractérisée en ce que** ladite peau (24) a été jointe à ladite plaque métallique (20) par un adhésif ou par un moyen mécanique, en enfermant éventuellement une partie de ladite plaque métallique.

10. Kit d'étanchéité de câble (31) destiné à une unité de distribution de carburant, comprenant :
a) une première plaque d'étanchéité (32) constituée d'une plaque métallique (33) au moins partiellement couverte de manière étanche d'une peau (34) d'un élastomère, ladite première plaque d'étanchéité (32) ayant un premier trou à défoncer (35) dans la partie de ladite plaque métallique (33) couverte par ladite peau (34), ledit trou à défoncer (35) ayant une surface de section transversale a₁ ;
b) une seconde plaque d'étanchéité (36) constituée d'une plaque métallique (37) au moins partiellement couverte de manière étanche d'une peau (38) d'un élastomère, ladite seconde plaque d'étanchéité (36) ayant un second trou à défoncer (39) dans la partie de ladite plaque métallique (37) couverte par ladite peau (38), ledit second trou à défoncer (39) ayant une surface de section transversale a₂, où a₂ < a₁ ; et
c) câble (40) conçu pour être obturé de manière étanche par ladite première plaque d'étanchéité (32) et ladite seconde plaque d'étanchéité (36), ledit câble (40) ayant une première partie de blocage (41), une première partie de pénétration (42), une seconde partie de blocage (43) et une seconde partie de pénétration (44),
dans lequel ladite première partie de blocage (41) a une surface de section transversale essentiellement supérieure à a₁, et dans lequel ladite première partie de blocage (41) est couverte par un élastomère ;
dans lequel ladite première partie de pénétration (42) a une section transversale et une géométrie qui correspondent à ladite surface de section transversale a₁ ;
dans lequel ladite seconde partie de blocage (43) peut traverser ledit premier trou à défoncer (35) et a une surface de section transversale inférieure à a₁ mais supérieure à a₂, et dans lequel ladite seconde partie de blocage (43) est couverte par un élastomère ; et
dans lequel ladite seconde partie de pénétration (44) a une section transversale et une géométrie qui correspondent à ladite surface de section transversale a₂.

11. Kit d'étanchéité de câble selon la revendication 10, **caractérisé en ce que** lesdits élastomères sont des élastomères thermoplastiques.

12. Kit d'étanchéité de câble selon la revendication 10 ou 11, **caractérisé en ce que** ledit câble (40) a une partie de verrouillage (45) qui est conçue pour passer à travers lesdits premier et second trous à défoncer (35, 39), et qui comprend un moyen (46) servant à l'accrochage à ladite seconde plaque d'étanchéité (36).

13. Kit d'étanchéité de câble selon l'une quelconque des revendications 10 à 12, **caractérisé en ce qu'**au moins une desdites première et seconde plaques d'étanchéité (32, 36) est une plaque d'étanchéité selon l'une quelconque des revendications 1 à 5.

14. Kit d'étanchéité de câble selon l'une quelconque des revendications 10 à 12, **caractérisé en ce qu'**au moins une desdites première et seconde plaques d'étanchéité (32, 36) est constituée d'une plaque métallique (20) dans laquelle a été formé au moins un trou traversant (22) destiné au passage d'un câble, et sur laquelle a été jointe une peau (24) d'un élastomère polymérisé et de préférence thermoplastique, de façon à couvrir de manière étanche ledit trou (22).

15. Kit d'étanchéité de conduit (90) destiné à une unité de distribution de carburant, comprenant :
a) une première plaque d'étanchéité (98) constituée d'une plaque métallique (93) au moins partiellement couverte de manière étanche d'une peau (91) d'un élastomère, ladite plaque métallique (93) ayant un premier trou à défoncer (100) dans la partie de ladite plaque métallique (94) couverte par ladite peau (91) ;
b) une seconde plaque d'étanchéité (99) constituée d'une plaque métallique (94) au moins partiellement couverte de manière étanche d'une peau (92) d'un élastomère, ladite plaque métallique (94) ayant un second trou à défoncer (101) dans la partie de ladite plaque métallique (94) couverte par ladite peau (92) ; et
c) un conduit (97) conçu pour traverser ladite première plaque d'étanchéité (98) et ladite seconde plaque d'étanchéité (99) à travers leurs trous à défoncer (100, 101) ;
dans lequel les peaux (91, 92) sont conçues pour être rompues par le conduit (97) de sorte que lesdites peaux (91, 92) conjointement avec ledit conduit (97) fournissent une étanchéité supplémentaire contre une fuite indésirable de substances hautement inflammables et volatiles.

16. Kit d'étanchéité (90) de câble selon la revendication 15, **caractérisé en ce que** lesdits élastomères sont des élastomères thermoplastiques.

17. Kit d'étanchéité de conduit (90) selon la revendication 15 ou 16, **caractérisé en ce qu'**au moins une desdites première et seconde plaques d'étanchéité (98, 99) est une plaque d'étanchéité selon l'une quelconque des revendications 1 à 5.

18. Kit d'étanchéité de conduit (90) selon la revendication 15 ou 16, **caractérisé en ce qu'**au moins une desdites première et seconde plaques d'étanchéité (98, 99) est constituée d'une plaque métallique (20) dans laquelle a été formé au moins un trou traversant (22) destiné au passage d'un conduit, et sur laquelle a été jointe une peau (24) d'un élastomère polymérisé et de préférence thermoplastique, de façon à couvrir de manière étanche ledit trou (22).

19. Unité de distribution de carburant (56) servant à ravitailler en carburant des véhicules à moteur, **caractérisée en ce qu'**elle comprend une plaque d'étanchéité (61, 62) selon l'une quelconque des revendications 1 à 6.

20. Unité de distribution de carburant (56) servant à ravitailler en carburant des véhicules à moteur, **caractérisée en ce qu'**elle comprend un kit d'étanchéité de câble (31) selon l'une quelconque des revendications 10 à 14, et/ou un kit d'étanchéité de conduit (90) selon l'une quelconque des revendications 15 à 18.
